# EUROPEAN PATENT SPECIFICATION

(11) **EP 1 459 942 B1**
(45) Date of publication and mention of the grant of the patent: **22.03.2006**
(21) Application number: 03026560.7
(22) Date of filing: 18.11.2003
(51) Int. Cl.: B60R 21/20, B60N 2/427

(54) **Occupant protection system**
Insassenschutzvorrichtung
Dispositif de protection de passager

(30) Priority: 12.03.2003 JP 2003066877; 10.04.2003 JP 2003106704; 30.07.2003 JP 2003203883
(43) Date of publication of application: 22.09.2004
(73) Proprietor: TAKATA CORPORATION, Minato-ku, Tokyo 106-8510 (JP)
(72) Inventor: Yoshikawa, Hiromichi, Takata Corporation, Tokyo 106-8510 (JP)
(74) Representative: Banzer, Hans-Jörg

(56) References cited:
- DE-U- 20 301 516
- US-A1- 2001 011 810
- PATENT ABSTRACTS OF JAPAN vol. 2002, no. 07, 3 July 2002 (2002-07-03) -& JP 2002 079862 A (TOYODA GOSEI CO LTD), 19 March 2002 (2002-03-19)
- PATENT ABSTRACTS OF JAPAN vol. 2002, no. 07, 3 July 2002 (2002-07-03) -& JP 2002 079861 A (TOYODA GOSEI CO LTD), 19 March 2002 (2002-03-19)
- PATENT ABSTRACTS OF JAPAN vol. 1995, no. 06, 31 July 1995 (1995-07-31) -& JP 07 081466 A (NISSAN MOTOR CO LTD), 28 March 1995 (1995-03-28)

## Description

### [Technical Field of the Invention]

The present invention relates to an occupant protection system for protecting an occupant in the seat of a vehicle such as a car in the event of a crash and, more particularly, it relates to an occupant protection system for preventing the body of the occupant from moving forward and downward in the event of the front crash.

### [Description of the Related Art]

Japanese Unexamined Patent Application Publication No. 10-217818 describes an occupant protection system for preventing a so-called submarine phenomenon such that an occupant passes below a lap belt during a front crash even with a seat belt, as a system for protecting an occupant in the event of a car crash, which disposes an inflatable airbag between a seat cushion and a seat pan and inflates the airbag in a car crash to thereby push the front of the seat cushion.

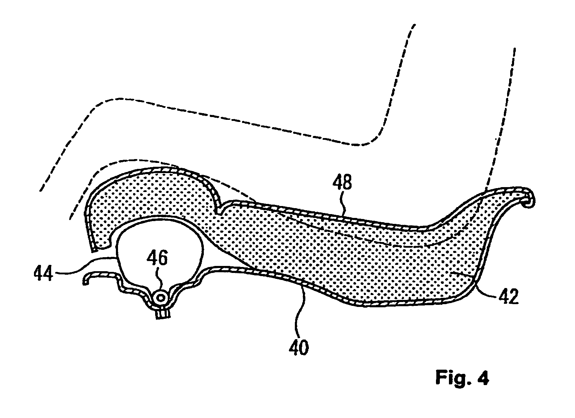

Fig. 4 is a longitudinal sectional view of a seat of the occupant protection system in the Gazette. An airbag 44 is disposed between a cushion frame 40 and a seat pad 42 at the front of the seat. The airbag 44 extends along the width of the seat and can be inflated by an inflator 46. The top surface of the seat pad 42 is covered with a trim cover 48, on which the occupant sits.

When the inflator 46 is activated in a car crash, the airbag 44 inflates to push up the front of the seat pad 42, or push it up from below to thereby increase the density, thus preventing (and restricting) the forward movement of the occupant body.

### [Problems to be Solved by the Invention]

With the conventional occupant protection system in Fig. 4, when the airbag inflates, the longitudinal center of the airbag inflates most, thus tending to become a center-inflated state (spindle shape). When the airbag inflates into a center-inflated state, the center of the width of the seat pad is strongly pushed up, whereas the left and right sides of the seat pad at which left and right femurs are located are not pushed up as strongly as the central area. Therefore, in order to push up also the left and right sides of the seat pad, it is necessary to use a high-capacity airbag. Increasing the capacity of the airbag requires a high-output inflator (gas generator) correspondingly.

US 2001/0011810 A1 shows an occupant protection system according to the preamble of claim 1.

It is an object of the present invention to provide an occupant protection system capable of inflating sufficiently early.

### [Means for Solving the Problems]

According to the present invention this object is achieved by an occupant protection system as defined in claim 1. The dependent claims define preferred and advantageous embodiments of the invention.

An occupant protection system according to the present invention includes an airbag disposed between a seat cushion and a seat pan so as to extend along the width of a seat and being inflatable so as to push the front of the seat cushion from below; and a gas generator for inflating the airbag in an emergency; and a bag enclosure enclosing at least a longitudinal intermediate part of the airbag.

In the occupant protection system according to the invention, at least the intermediate part along the length of the airbag (along the width of the seat) is enclosed by the bag enclosure. Accordingly, the intermediate part is prevented from inflating more as compared with the left and right sides when the airbag inflates, and so the left and right sides of the airbag also inflate sufficiently. Consequently, the left and right sides of the seat cushion are also pushed up sufficiently from below. Moreover, the left and right sides of the airbag can be inflated sufficiently without having to use a high-output gas generator, so that the cost and weight of the gas generator can be reduced.

The bag enclosure may enclose either the longitudinal center of the airbag or a plurality of longitudinal intermediate portions of the airbag. When the bag enclosure encloses only part of the length of the airbag, a less amount of the bag enclosure is required.

According to the invention, the bag enclosure may be constructed to enclose a part from the vicinity of the left end of the airbag to the vicinity of the right end. With such a structure, the airbag can be inflated to become substantially equal in size (for example, the thickness or cross-sectional area) from the vicinity of the left end of the airbag to the vicinity of the right end. Therefore, the seat cushion can be pushed up from below by a substantially equal pushing-up force from the left side to the right side.

According to the invention, the perimeter of the bag enclosure is smaller than that of the airbag in an inflated condition. With such a structure, the maximum perimeter of the inflated airbag is limited to the perimeter of the bag enclosure, so that the inner pressure of the airbag can be increased. This allows the entire airbag to inflate sufficiently early.

According to the invention, the bag enclosure may be joined to the seat pan. With such a structure, the inflated airbag is restrained to the seat pan by the bag enclosure. Therefore, even when forward pressure is applied to the inflated airbag from the lumbar part of the occupant that is moving forward of the vehicle, forward movement of the airbag is prevented or reduced and thus the forward movement of the occupant body is further reduced.

According to the invention, the gas generator may be disposed in the airbag and fastened to the seat pan with a fastener passing through the airbag and the airbag may be sandwiched between the gas generator and the seat pan. This increases the strength of mounting the airbag to the seat pan and reduces stress applied to the portion of the airbag fastening to the seat pan during the inflation of the airbag.

According to the invention, a cover for covering the airbag may be provided. The cover may be constructed to be broken or deformed when the airbag inflates to allow the inflation of the airbag. Providing the cover prevents the abrasion of the airbag and reduces the durability required for the airbag.

### [Brief Description of the Drawings]

Fig. 1 is a perspective view of a seat frame equipped with an occupant protection system according to an embodiment of the present invention.
Fig. 2 is a sectional view taken along line II-II of Fig. 1.
Fig. 3 is a perspective view of an occupant protection system according to another embodiment.
Fig. 4 is a sectional view of a related-art occupant protection system.
Fig. 5 is a perspective view of a seat frame equipped with an occupant protection system, with an airbag being inflated, according to another embodiment.
Fig. 6 is a schematic diagram of an occupant protection system according to still another embodiment.
Fig. 7 is a perspective view of an occupant protection system according to a further embodiment.
Fig. 8 is a longitudinal sectional view of an occupant protection system according to a still further embodiment.
Fig. 9 is a longitudinal schematic diagram of an occupant protection system according to a yet further embodiment.
Fig. 10 is an explanatory diagram of a structure in which an airbag and an enclosure are covered with a cover in advance.

### [Description of the Embodiments]

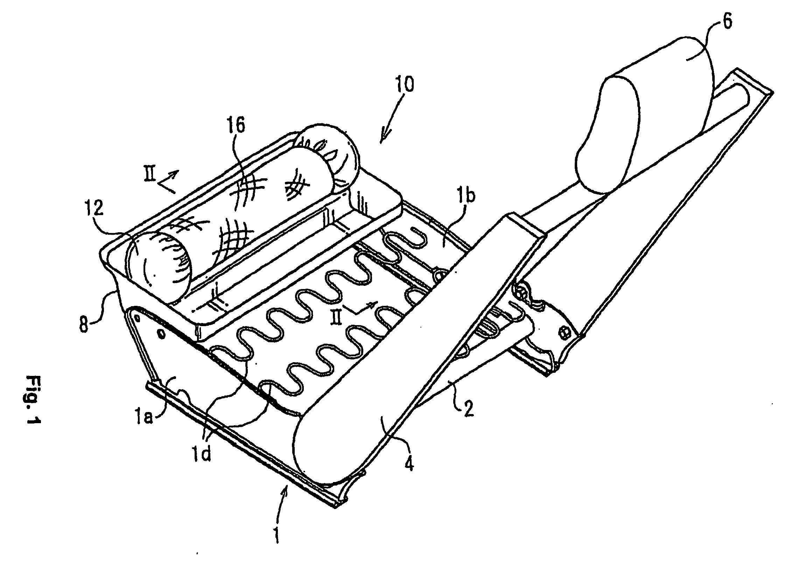

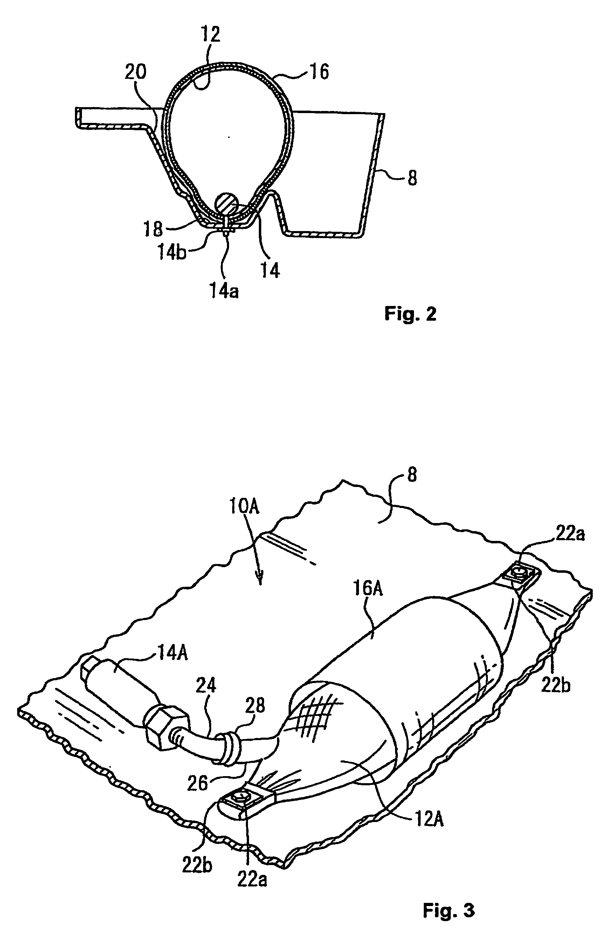

Embodiments of the present invention will be described hereinafter with reference to the drawings. Fig. 1 is a perspective view of the frame of a seat equipped with an occupant protection system according to an embodiment of the present invention. Fig. 2 is a sectional view taken along line II-II of Fig. 1.

The frame of the car seat includes a base frame 1 and a back frame 4 rotatably connected to the base frame 1 through a support shaft 2 and a reclining device (not shown). The back frame 4A mounts a headrest 6 on the top thereof. The base frame 1 includes left and right side frames 1a and 1b. A seat pan 8 is placed between the fronts of the side frames 1a and 1b.

The base frame 1 and the back frame 4 have a seat cushion and a seat back made of urethane or the like (not shown), respectively. The seat pan 8 is arranged under the front of the seat cushion. Numeral 1d of Fig. 1 denotes a spring for supporting the seat cushion.

An occupant protection system 10 includes an inflatable airbag 12 arranged on the seat pan 8 for pushing the front of the seat cushion from below, a gas generator 14 for inflating the airbag 12, and a bag enclosure (hereinafter, sometimes simply referred to as an enclosure) 16 that encloses the airbag 12 and is joined to the seat pan 8. The airbag 12 extends along the width of the seat pan 8 (along the width of the vehicle).

According to the embodiment, the bag enclosure 16 winds a sheet-like wide member across the area from the vicinity of the left end to the vicinity of the longitudinal right end of the airbag 12 and joins one rim to the other rim into a cylindrical shape. The perimeter of the bag enclosure 16 is smaller than that of the airbag 12 in an inflated condition.

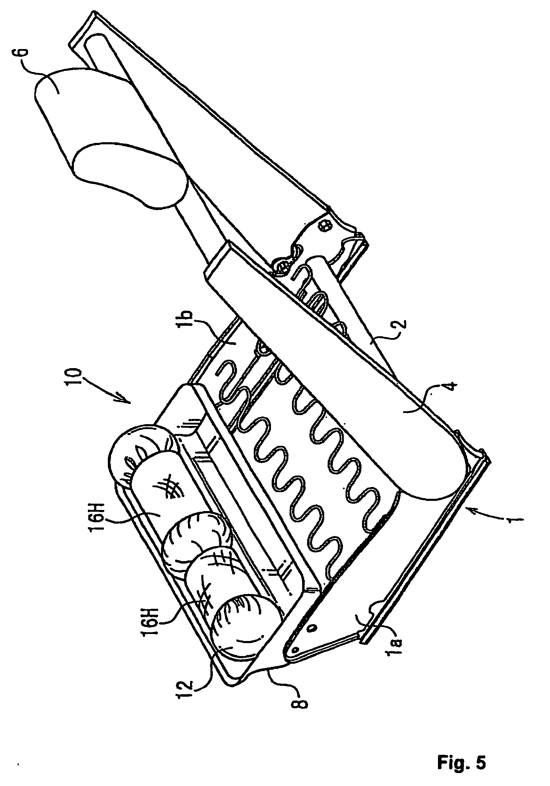

In this embodiment, the length of the bag enclosure 16 along the length of the airbag 12 is approximately equal to that from the left end to the right end of the airbag 12. However, the bag enclosure 16 may be shorter than that, like a bag enclosure 16A of Fig. 3. The lateral length of the bag enclosure is preferably from 40 percent to 100 percent and, more preferably, from 50 percent to 90 percent of that of the airbag 12. Only one bag enclosure 16 may be disposed or, alternatively, a plurality of the bag enclosures may be disposed along the length of the airbag 12, as in Fig. 5 (described later). When the plurality of bag enclosures is disposed, the total of the lateral lengths of the bag enclosures is preferably within the above range.

The sheet-like member of the bag enclosure 16 is preferably made of a material that is hard to expand or does not expand at all in the circumferential direction of the bag enclosure 16. The sheet-like member of the bag enclosure 16 preferably has a moisture proof property (water proof property). The sheet-like member may be made of a relatively flexible material such as cloth, a synthetic-resin sheet, or a synthetic-resin mesh sheet or, alternatively, made of a hard material such as a metal plate or a metal mesh.

The seat pan 8 has, on the top, a recess 18 extending along the width of the vehicle. In a normal state (not in an emergency such as a car crash), the airbag 12 is housed in the recess 18 in a state in which it is folded together with the bag enclosure 16.

In this embodiment, the airbag 12 includes therein the gas generator 14 shaped like a rod. The gas generator 14 extends such that the length is arranged along the width of the vehicle. The gas generator 14 has a gas port (not shown) in the circumference thereof, through which a jet of gas is emitted radially.

The gas generator 14 has a stud bolt 14a projected therefrom. The stud bolt 14a passes through the respective lower surfaces of the airbag 12 and the bag enclosure 16 and the bottom of the recess 18 and projects downward relative to the seat pan 8. The stud bolt 14a is fastened to the seat pan 8 with a nut 14b. In this way, the gas generator 14, the airbag 12, and the bag enclosure 16 are joined to the seat pan 8.

In this embodiment, a plurality of the stud bolts 14a projects along the length of the gas generator 14 with a space. The gas generator 14, the airbag 12, and the bag enclosure 16 are secured to the seat pan 8 with the stud bolts 14a at a plurality of positions with a space along the width of the vehicle.

As Fig. 2 shows, the front of the seat pan 8 is higher than the front rim of the recess 18 and a step surface 20 between the front of the seat pan 8 and the front rim of the recess 18 is opposed to the inflated airbag 12 from the front of the vehicle. The step surface 20 extends like a bank along the front rim of the recess 18 and along the width of the vehicle.

In the occupant protection system 10 with such a structure, when a frontal car crash is sensed, the gas generator 14 is activated to emit a jet of gas, thereby inflating the airbag 12 with the gas from the gas generator 14. Consequently, the front of the seat cushion is pushed up or thrust up from below to increase the density, thereby preventing or restricting the forward movement of the lumbar part of the occupant.

In the occupant protection system 10 according to the embodiment, since the bag enclosure 16 encloses the airbag 12 from the vicinity of the left end to the vicinity of the right end, the airbag 12 inflates so as to be substantially equal in size (thickness or cross-sectional area) from the vicinity of the left end to the vicinity of the right end. Thus the seat cushion is pushed up from below by an upward pushing force that is substantially equal from the left side to the right side.

According to the embodiment, since the perimeter of the bag enclosure 16 is smaller than that of the inflated airbag 12, the maximum size (maximum diameter) of the inflated airbag 12 is limited to the perimeter of the bag enclosure 16, thus increasing the inner pressure of the airbag 12. This also allows the entire airbag 12 to inflate sufficiently early.

In this embodiment, since the bag enclosure 16 is joined to the seat pan 8, the inflated airbag 12 is restrained to the seat pan 8 by the bag enclosure 16. Therefore, when forward pressure is applied to the inflated airbag 12 from the lumbar part of the occupant that is moving forward of the vehicle, the forward movement of the airbag 12 is prevented or reduced, so that the forward movement of the occupant body is decreased.

Moreover, in this embodiment, the step surface 20 between the front of the seat pan 8 and the recess 18 is opposed to the inflated airbag 12 from the front of the vehicle. Accordingly, even when a very large forward pressure is applied to the airbag 12 from the lumbar part of the occupant that is moving forward of the vehicle, the step surface 20 supports the airbag 12 to prevent it from moving forward of the vehicle.

In this embodiment, since the bag enclosure 16 covers the airbag 12 from the vicinity of the left end to the vicinity of the right end, the degradation of the airbag 12 due to moisture etc. and an damage on the airbag 12 due to abrasion with the seat cushion or the like can be prevented.

While the embodiment includes the gas generator 14 of a type having a gas port on the side peripheral surface, from which a jet of gas is emitted radially (along the diameter of the airbag 12), the invention may use other types of gas generator. For example, the invention may use a gas generator of a type having a gas port at the end and emitting a jet of gas from the gas port substantially only in one direction. With the gas generator of a type that emits a jet of gas from the gas port substantially only in one direction, it is preferable to use a diffuser in combination, for dispersing the flow of the gas emitted from the gas generator along the diameter of the airbag.

Fig. 3 is a perspective view of an occupant protection system 10A according to another embodiment.

Also the occupant protection system 10A includes an inflatable airbag 12A arranged between a seat cushion (not shown) and the seat pan 8 for pushing the front of the seat cushion from below, a gas generator 14A for inflating the airbag 12A, and a bag enclosure 16A that encloses the airbag 12A.

With the embodiment, the airbag 12A extends along the lateral width of the seat pan 8 (along the width of the vehicle), opposite ends of which are fastened to the upper surface of the seat pan 8 with bolts 22a. The opposite ends of the airbag 12A are each covered with a washer (plate) 22b. Each bolt 22a is inserted into respective bolt insertion holes (not shown) of the washer 22b and the end of the airbag 12A to pass therethrough and is then screwed into the seat pan 8. The opposite ends of the airbag 12A are each clamped by the washer 22b and the seat pan 8.

Since the bolt 22a is tightened through the washer 22b in this way, a stress generated at the peripheries of the bolt insertion holes when the airbag 12A has inflated or a load is applied to the airbag 12A from the occupant is dispersed, thus preventing the peripheries of the holes from being broken to thereby bring the ends of the airbag 12A out from engagement with the bolts 22a or the occurrence of the leakage of gas.

In the invention, the material for the washer 22b is not particularly limited and any other materials, such as metal and hard synthetic resins which hold necessary strength, can be used for the washer 22b.

The gas generator 14A has a gas port (not shown) at the end. The gas port has a pipe 24 joined thereto, through which the gas generator 14A is joined to one end of the airbag 12A. Specifically, the end of the pipe 24 is inserted into a pipe reception port 26 at one end of the airbag 12A. The pipe reception port 26 is brought in close contact with the side circumference of the pipe 24 with a band 28.

The end of the pipe 24 inserted through the pipe reception port 26 into the airbag 12A has a diffuser (not shown) for dispersing the gas from the gas generator 14A radially (along the diameter of the airbag 12A) in the airbag 12A.

The bag enclosure 16A is formed in cylindrical shape by winding a sheet-like member with a size to surround the longitudinal center of the airbag 12A and joining the one side rim to the other side rim. The perimeter of the bag enclosure 16A is smaller than that of the airbag 12A in an inflated condition. The bag enclosure 16A is arranged to enclose the center of the airbag 12A.

In this embodiment, the lower surface of the bag enclosure 16A is fastened to the upper surface of the seat pan 8 with rivets (not shown) or the like. However, the bag enclosure 16A may be discontiguous to the seat pan 8.

Other arrangements of the occupant protection system 10A are similar to those of the occupant protection system 10 in Figs. 1 and 2.

With the occupant protection system 10A, since the longitudinal center of the airbag 12A (width of the seat) is enclosed by the bag enclosure 16A, the vicinity of the center of the airbag 12A is prevented from inflating excessively as compared with the left and right sides, so that the left and right sides of the airbag 12A also inflate sufficiently. Consequently, the left and right sides of the seat cushion can also be sufficiently pushed up from below. The left and right sides of the airbag 12A can be sufficiently inflated without using the gas generator 14A of high output, so that the cost and weight of the gas generator 14A can be reduced.

Also in the embodiment, since the perimeter of the bag enclosure 16A is smaller than that of the airbag 12 in an inflated condition, the maximum size (maximum diameter) of the inflated airbag 12A is limited to the perimeter of the bag enclosure 16A, thus increasing the inner pressure of the airbag 12A. This allows the entire airbag 12A to inflate sufficiently early.

In this embodiment, the airbag 12A is fixed to the seat pan 8 only at longitudinal opposite ends thereof. However, the bag enclosure 16A arranged at the longitudinal center of the airbag 12A is fixed to the seat pan 8, so the center of the inflated airbag 12A is restrained to the seat pan 8 by the bag enclosure 16A. Therefore, even with the occupant protection system 10A, when forward pressure is applied to the inflated airbag 12A from the lumbar part of the occupant that is moving forward of the vehicle, the forward movement of the airbag 12A is prevented or reduced, so that the forward movement of the occupant body is decreased.

In this occupant protection system 10A, when the gas generator 14A is activated to emit a jet of gas, the gas from the gas generator 14A is emitted radially in the airbag 12A through the pipe 24 and the diffuser. Therefore, the airbag 12A inflates quickly along the thickness to push the seat cushion upward.

Fig. 5 shows an embodiment including a plurality of bag enclosures. In this embodiment, two bag enclosures 16H are disposed on the left and right of the airbag 12, respectively. Although there is a space between the bag enclosures 16H, the bag enclosures 16H may be arranged in contact with each other. Although two bag enclosures are used in Fig. 5, three bag enclosures may be used. As described above, the total of the lateral lengths of the plurality of bag enclosures is preferably from 40 to 100 percent of the lateral length of the airbag 12 and, more preferably, from 50 to 90 percent.

Other arrangements of Fig. 5 are similar to those of Fig. 1 and the same numerals denote the same components. Also the occupant protection system of Fig. 5 offers advantages similar to those of the occupant protection system of Fig. 1.

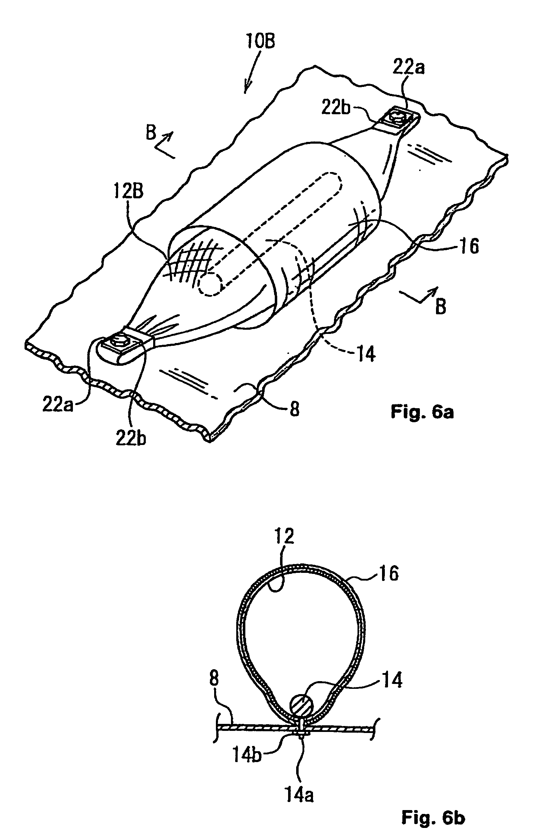

In the occupant protection system 10 of Figs. 1 and 2, the gas generator 14 is arranged in the airbag 12, and the airbag 12 and the bag enclosure 16 are fastened to the seat pan 8 with the stud bolt 14a projecting from the gas generator 14. In this case, opposite ends of the airbag 12 may also be fastened to the seat pan 8 with bolts or the like in a manner similar to the airbag 12A of the occupant protection system 10A of Fig. 3. Fig. 6(a) is a perspective view of an occupant protection system 10B with such a structure. Fig. 6(b) is a sectional view taken along line B-B of Fig. 6(a).

Also in the occupant protection system 10B of Fig. 6, the gas generator 14 is placed in the airbag 12B as in the occupant protection system 10 of Figs. 1 and 2. The airbag 12B is enclosed by the bag enclosure 16 at the longitudinal center.

Also in this embodiment, the stud bolt 14a projects from the gas generator 14. As Fig. 6(b) shows, the stud bolt 14a passes through the respective lower surfaces of the airbag 12B and the bag enclosure 16 and the bottom of the recess 18 and projects downward relative to the seat pan 8. The nut 14b is tightened to the stud bolt 14a from below the seat pan 8, so that the gas generator 14 and the lower surfaces of the airbag 12B and the bag enclosure 16 adjacent to the center rather than the opposite ends are joined to the seat pan 8. The airbag 12B is sandwiched between the gas generator 14 and the seat pan 8.

With the occupant protection system 10B, the opposite ends of the airbag 12B are also fastened to the seat pan 8 with the bolts 22a, like the airbag 12A of the occupant protection system 10A in Fig. 3. Also in this embodiment, the opposite ends of the airbag 12B are each covered with the washer (plate) 22b. Each bolt 22a is inserted into bolt insertion holes (not shown) in the washer 22b and the end of the airbag 12B to pass therethrough and is then screwed into the seat pan 8. The opposite ends of the airbag 12B are each clamped by the washer 22b and the seat pan 8.

As described above, the bolt 22a is thus tightened via the washer 22b, so that a stress generated at the peripheries of the bolt insertion holes when the airbag 12B has inflated or a load is applied to the airbag 12B from the occupant is dispersed, thus preventing the peripheries of the holes from being broken to thereby bring the ends of the airbag 12B out from engagement with the bolts 22a, or the like.

Other arrangements of the occupant protection system 10B are the same as those of the occupant protection system 10 in Figs. 1 and 2.

With the occupant protection system 10B, the airbag 12B is fastened to the seat pan 8 not only at the lower surface in the longitudinal center but also at the longitudinal opposite ends. Accordingly, when pressure is applied to the airbag 12B inflated in a car crash, forward of the vehicle from the occupant, the airbag 12B can reliably prevent or restrict the forward movement of the occupant across the entire length without retracting forward of the vehicle.

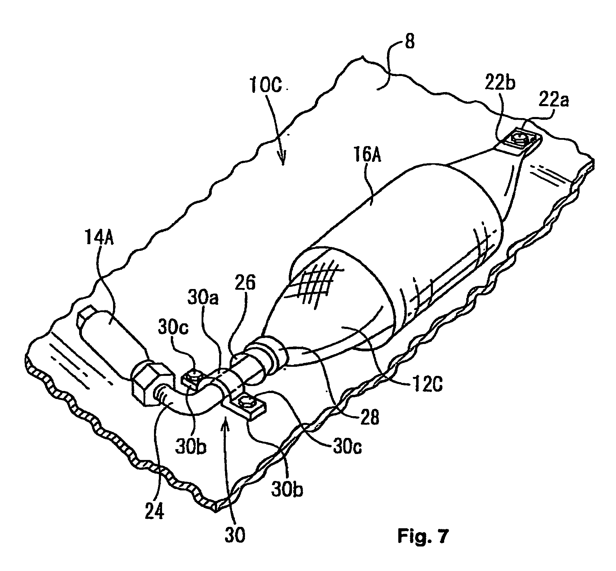

In the occupant protection system 10A of Fig. 3, the gas generator 14A is joined to the pipe reception port 26 on the side of the airbag 12A adjacent to one end thereof through the pipe 24. However, in the invention, the joint structure and joint position of the gas generator to the airbag are not limited to the structure in the drawing. For example, the pipe reception port may be provided at one end of the airbag, to which the gas generator may be connected through a pipe, as in the occupant protection system 10C of Fig. 7.

In this case, the end of the airbag may be fastened to the seat pan through the pipe by fixing the pipe to the seat pan instead of directly fixing the end of the airbag to the seat pan with bolts or the like.

In an occupant protection system 10C of Fig. 7, an airbag 12C has a pipe reception port 26 at longitudinal one end of an airbag 12C, into which one end of the pipe 24 is inserted. The pipe reception port 26 is brought into contact with the side circumference of the pipe 24 with the band 28. The pipe 24 has the gas generator 14A joined to the other end thereof.

The pipe 24 is fixed to the seat pan 8 with a bracket 30. The bracket 30 includes a C-shaped band 30a that caps the pipe 24 and two flanges 30b extending from opposite ends of the C-shaped band 30a sideward along the upper surface of the seat pan 8.

The pipe 24 is fixed to the seat pan 8 with the bracket 30 in such a way that the C-shaped band 30a caps the longitudinal intermediate part of the pipe 24 and the flanges 30b are each fastened to the seat pan 8 with bolts 30c.

In the occupant protection system 10C, the other end of the airbag 12C is fastened to the seat pan 8 with the bolt 22a. Also in this embodiment, the washer 22b caps the end of the airbag 12C and the bolt 22a is screwed into the seat pan 8 through the washer 22b and the end of the airbag 12C.

Other arrangements of the occupant protection system 10C are similar to those of the occupant protection system 10A in Fig. 3.

In this occupant protection system 10C, the end of the airbag 12C is fastened to the seat pan 8 in such a way that the pipe 24 is joined to the pipe reception port 26 and the pipe 24 is then fixed to the seat pan 8 with the bracket 30. Accordingly, there is no need for the bolt or the like to fasten the end of the airbag 12C to the seat pan 8 and so the airbag 12C can be efficiently mounted to the seat pan 8.

Although the gas generator 14A is arranged on the upper surface of the seat pan 8 in Figs. 3 and 7, it may be arranged on other locations, such as on the lower surface of the seat pan 8, on the sides of the seat side frames 1a and 1b (refer to Fig. 1), or under the spring 1d (refer to Fig. 1) for supporting the seat cushion. The pipe 24 for guiding gas from the gas generator 14A into the airbag 12A or 12C may also be arranged not along the upper surface of the seat pan 8 but along the lower surface of the seat pan 8, along the sides of the seat side frames 1a and 1b, or under the spring 1d for supporting the seat cushion.

This arrangement increases the flexibility of the layout of the gas generator 14A and the placement of the gas generator 14A and the pipe 24 under the seat cushion prevents a decrease in comfortability of the seat cushion.

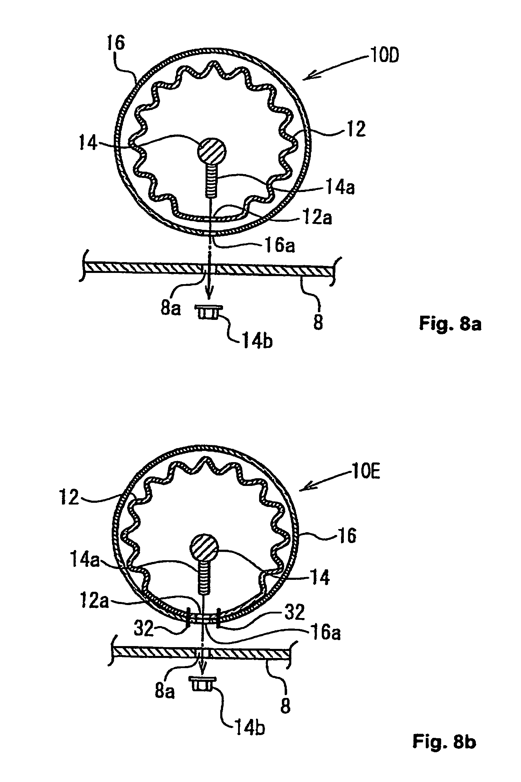

In the invention, the airbag and the bag enclosure may be separated from each other as in an occupant protection system 10D of Fig. 8(a) or, alternatively, they may be integrated beforehand as in an occupant protection system 10E of Fig. 8(b). Fig. 8(a) is an exploded longitudinal sectional view (taken along the vertical plane of the long side of the vehicle) of the occupant protection system 10D in which the airbag 12 and the enclosure 16 are separated from each other. Fig. 8(b) is an exploded longitudinal sectional view of the occupant protection system 10E in which the airbag 12 and the enclosure 16 are integrated with each other in advance.

The occupant protection system 10D of Fig. 8(a) and the occupant protection system 10E of Fig. 8(b) include the gas generator 14 in the airbag 12 enclosed by the enclosure 16, like the occupant protection system 10 of Figs. 1 and 2. The stud bolt 14a projecting from the gas generator 14 is inserted into the bolt insertion holes 12a, 16a, and 8 formed in the respective lower surfaces of the airbag 12 and the enclosure 16 and the seat pan 8, respectively, and the nut 16b is tightened to the stud bolt 14a from below the seat pan 8, thereby joining the gas generator 14, the airbag 12, and the enclosure 16 to the seat pan 8.

In the airbag 10D of Fig. 8(a), when the airbag 12 and the enclosure 16 are mounted to the seat pan 8 with the stud bolt 14a of the gas generator 14, the stud bolt 14a is first inserted into the bolt insertion hole 12a of the airbag 12 from the inside of the airbag 12, is then inserted into the bolt insertion hole 16a of the enclosure 16 that encloses the airbag 12, and is further inserted into the bolt insertion hole 8a of the seat pan 8.

In the occupant protection system 10E of Fig. 8(b), the ground fabrics on the lower sides of the airbag 12 and the enclosure 16 are put one on another such that the respective bolt insertion holes 12a and 16a are concentric with each other and are then joined together by stitching or the like. Numeral 32 in Fig. 8(b) represents a seam of sewing thread, etc. that joins the ground fabrics on the lower sides of the airbag 12 and the enclosure 16.

In the occupant protection system 10E, when the airbag 12 and the enclosure 16 are mounted to the seat pan 8 with the stud bolt 14a of the gas generator 14, the stud bolt 14a is inserted into the bolt insertion hole 12a of the airbag 12 from the inside of the airbag 12, so that the stud bolt 14a can be inserted also into the bolt insertion hole 16a of the enclosure 16 that encloses the airbag 12, thus facilitating an efficient operation.

Since the airbag 12 and the enclosure 16 are integrated in advance, there is no need to carry the airbag 12 and the enclosure 16 separately when they are carried to a seat assembly line after the completion of manufacturing them, thus improving transfer efficiency. Furthermore, when mounting the airbag 12 and the enclosure 16 to the seat, there is no need to cover the enclosure 16 on the airbag 12 and to prevent the enclosure 16 covering the airbag 12 from getting out of position, thus increasing the efficiency of mounting to the seat.

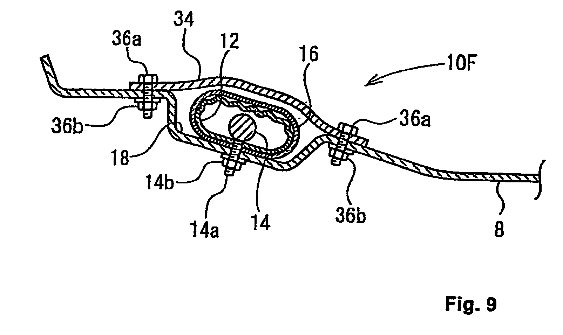

In the present invention, a cover may be mounted so as to cover the airbag, the enclosure, the gas generator and so on which are mounted to the seat pan. Fig. 9 is a longitudinal sectional view of an occupant protection system 10F with such a structure.

In the occupant protection system 10F of Fig. 9, the seat pan 8 has the recess 18 on the upper surface thereof, as in the occupant protection system 10 of Figs. 1 and 2, and mounts the airbag 12, the enclosure 16, and the gas generator 14 in the recess 18. Also in this embodiment, the gas generator 14 is arranged in the airbag 12 enclosed by the enclosure 16 and the stud bolt 14a projecting from the gas generator 14 is inserted into the bolt insertion holes (not shown) formed in the respective lower surfaces of the airbag 12 and the enclosure 16 and the bottom of the recess 18, respectively, and the nut 14b is tightened to the stud bolt 14a from below the seat pan 8, thereby joining the gas generator 14, the airbag 12, and the enclosure 16 to the bottom of the recess 18.

This embodiment includes a cover 34 in the recess 18 so as to cover the airbag 12, the enclosure 16, and the gas generator 14. The cover 34 of this embodiment is a sheet-like member of a size that covers the entire recess 18, whose pair of side rims are fastened to the upper rim of the recess 18 adjacent to the front of the vehicle and the upper rim adjacent to the rear of the vehicle, respectively, with a bolt 36a and a nut 36b.

The cover 34 is constructed, when the airbag 12 has inflated, to follow the inflation of the airbag 12 to be deformed so as to inflate upward or, to be broken by the inflating force to allow the inflation of the airbag 12, or to come off the bolt 36a to be pushed up by the inflating force of the airbag 12.

The material for the cover 34 is not particularly limited and various materials, such as ground fabrics (cloth) similar to that of the airbag 12 and the enclosure 16, synthetic resins, and metal, may be used.

In this embodiment, although the pair of rims of the cover 34 is fastened to the upper rim of the recess 18 adjacent to the front of the vehicle and the upper rim adjacent to the rear of the vehicle, respectively, with the bolt 36a and the nut 36b, the means and position for fastening the cover 34 are not limited to that.

In an occupant protection system 10F with such a structure, the airbag 12, the enclosure 16, and the gas generator 14 disposed in the recess 18 are covered with the cover 34. This prevents damage to them due to abrasion by the seat cushion. This also prevents a decrease in comfortability of the seat cushion by the unevenness due to the airbag 12, the enclosure 16, the gas generator 14, and the recess 18 digging into the seat cushion.

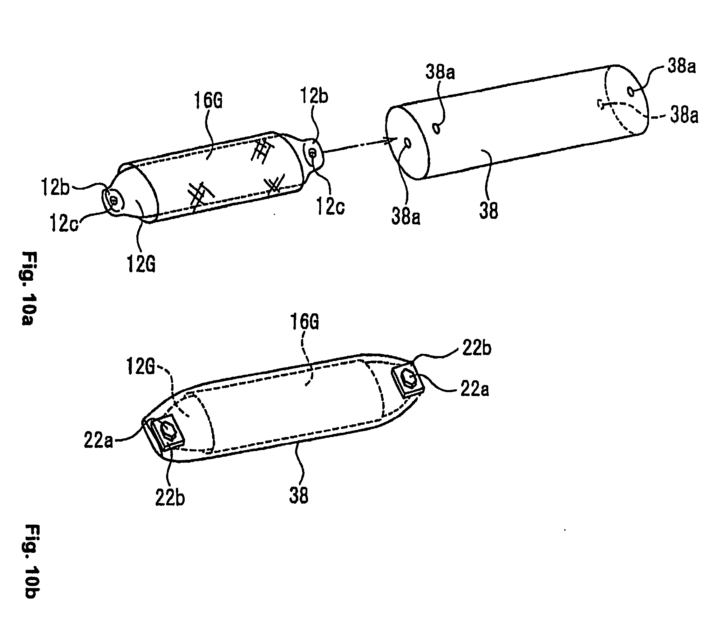

In this embodiment, although the airbag 12, the enclosure 16, and the gas generator 14 are mounted to the recess 18 (seat pan 8) and the cover 34 is then mounted to cover them, an airbag and a bag enclosure may be covered with a cover before the mounting to a seat pan. Fig. 10(a) is an exploded perspective view of the airbag, the enclosure, and the cover with such a structure. Fig. 10(b) is a perspective view thereof after the cover is mounted.

In Fig. 10, an airbag 12G includes two brackets 12b at opposite sides for connecting the airbag 12G to a seat pan (not shown). The airbag 12G is enclosed by an enclosure 16G at the longitudinal center thereof. Each bracket 12b has a hole 12c for the bolt 22a to pass through.

In this embodiment, the airbag 12G in a state of mounting the enclosure 16G is covered with the cover 38 before the airbag 12G is joined to the seat pan. The cover 38 covers the entire length of the airbag 12G from the bracket 12b at one end of the airbag 12G to the bracket 12b at the other end. The left and right ends of the cover 38 each have an opening 38a that agrees with the hole 12c for the bolt 22a in the bracket 12b to pass through.

The enclosure 16G is mounted to the airbag 12G and the cover 38 is then placed to cover it. The bolt 22a is inserted into the hole 12c in each bracket 12b and the bracket 12b is fastened to the seat pan with the bolt 22a. Also in this embodiment, the bolt 22a is inserted into the opening 38a and the hole 12c via the washer 22b.

In this way, when the airbag 12G in a state of mounting the enclosure 16G is covered with the cover 38 before the airbag 12G and the enclosure 16G are joined to the seat pan, the airbag 12G, the enclosure 16G, and the cover 38 can be handled as one module, thus improving the efficiency of transfer to a seat assembly line and the efficiency of mounting to a seat.

In this embodiment, when the airbag and the enclosure are integrated in advance, as in Fig. 8(b), and when the airbag which mounts the enclosure is covered in advance, as in Fig. 10, a gas generator may be disposed in the airbag beforehand. In such a case, a stud bolt projecting from the gas generator may be inserted into bolt insertion holes of the airbag and the enclosure (and the cover) in advance, and a nut may then be tightened to the stud bolt to integrate the gas generator, the airbag, and the enclosure (and the cover) into one. This structure allows the gas generator, the airbag, and the enclosure (and the cover) to be handled as one module, thus further improving the efficiency of transfer to a seat assembly line and the efficiency of mounting to a seat.

In the above embodiments, the bag enclosure is formed of a flexible sheet material such as cloth or a synthetic resin sheet. However, it may be formed of a hard metal plate or the like. In this case, the metal plate is folded in two, a flat folded airbag is inserted therebetween, and opposite ends of the metal plate is secured to the seat pan with bolts or rivets. The metal plate is plastically deformed to be expanded by the inflation pressure of the airbag, thereby pushing up the seat cushion when the airbag inflates.

The metal plate is plastically reduced in size to be deformed gradually when a load is applied from an occupant via the seat cushion, and absorbs the kinetic energy of the occupant by the plastic deformation.

Two separate metal plates may be superposed, between which the airbag may be inserted or, alternatively, after the airbag is passed through a metal pipe, the metal pipe may be pressed to thereby sandwich the airbag therebetween. Of course, any other structures are possible.

In the above embodiments, although the bag enclosure is made of a wide sheet-like member, the structure of the bag enclosure is not limited to that. The invention may include a cord-like or beltlike bag enclosure.

When the bag enclosure is formed of a cord-like or beltlike member, the bag enclosure may be arranged at only one portion in the longitudinal center of the airbag or, alternatively, may be arranged in different positions along the length.

It should be understood that the above embodiments are only examples of the invention and that the invention is not limited to the embodiments shown in the drawings. For examples, the perimeter of the bag enclosure may be either equal or different along the length of the airbag.

In the above embodiments, the bag enclosure is fastened to the seat pan. According to the embodiment, however, the bag enclosure may not be fastened to the seat pan.

### [Advantages]

As described above, the invention provides an occupant protection system capable of sufficiently pushing up the left and right sides of a seat cushion from below without having to use a high-output gas generator. The invention provides high inner pressure to the airbag, thus allowing the entire airbag to inflate sufficiently early. When forward pressure is applied to the inflated airbag from the lumbar part of an occupant that is moving forward of the vehicle, the forward movement of the airbag can be prevented or reduced. Furthermore, the bag enclosure can be constructed to inflate to become substantially equal in size (for example, the thickness or cross-sectional area) from the vicinity of the left end of the airbag to the vicinity of the right end. Therefore, the seat cushion can be pushed up from below by a substantially equal pushing-up force from the left side to the right side.

## Claims

1. An occupant protection system, comprising:
an airbag (12; 12A; 12B; 12C; 12G) disposed between a seat cushion and a seat pan (8) so as to extend along the width of a seat and being inflatable so as to push the front of the seat cushion from below; and
a gas generator (14; 14A) for inflating the airbag in an emergency; and
a bag enclosure (16; 16A; 16G; 16H) enclosing at least a longitudinal intermediate part of the airbag (12; 12A; 12B; 12C; 12G), **characterized in that** the perimeter of the bag enclosure (16; 16A; 16G; 16H) is smaller than that of the airbag (12; 12A; 12B; 12C; 12G) in an inflated condition.

2. An occupant protection system according to Claim 1, wherein the bag enclosure (16; 16A; 16G) encloses at least a longitudinal center of the airbag (12; 12A; 12B; 12C; 12G).

3. An occupant protection system according to Claim 1, wherein the bag enclosure (16H) encloses at least a plurality of longitudinal intermediate parts of the airbag (12).

4. An occupant protection system according to Claim 1, wherein the bag enclosure (16) encloses a part from the vicinity of the left end of the airbag (12) to the vicinity of the right end.

5. An occupant protection system according to any one of Claims 1 to 4, wherein the bag enclosure (16; 16A) is joined to the seat pan (8).

6. An occupant protection system according to any one of Claims 1 to 5, wherein the gas generator (14) is disposed in the airbag (12; 12B) and fastened to the seat pan (8) with a fastener (14a; 14b) passing through the airbag (12; 12B) and the airbag (12; 12B) is sandwiched between the gas generator (14) and the seat pan (8).

7. An occupant protection system according to any one of Claims 1 to 6, further comprising a cover (34; 38) for covering the airbag (12; 12G), the cover (34; 38) being broken or deformed when the airbag (12; 12G) inflates to allow the inflation of the airbag (12; 12G).

## Patentansprüche

1. Insassenschutzsystem umfassend:
einen Airbag (12; 12A; 12B; 12C; 12G), welcher derart zwischen einem Sitzkissen und einer Sitzschale (8) angeordnet ist, dass er sich entlang der Breite eines Sitzes erstreckt und derart aufblasbar ist, dass er die Vorderseite des Sitzkissens von unten drückt; und
einen Gasgenerator (14; 14A) zum Aufblasen des Airbags in einem Notfall; und
ein Airbaggehäuse (16; 16A; 16G; 16H), welches mindestens ein Zwischenstück des Airbags (12; 12A; 12B; 12C; 12G) in Längsrichtung umgibt, **dadurch gekennzeichnet, dass** der Umfang des Airbaggehäuses (16; 16A; 16G; 16H) kleiner als derjenige des Airbags (12; 12A; 12B; 12C; 12G) in einem aufgeblasen Zustand ist.

2. Insassenschutzsystem nach Anspruch 1, wobei das Airbaggehäuse (16; 16A; 16G) zumindest eine Mitte des Airbags (12; 12A; 12B; 12C; 12G) in Längsrichtung umgibt.

3. Insassenschutzsystem nach Anspruch 1, wobei das Airbaggehäuse (16H) zumindest eine Mehrzahl von Zwischenstücken des Airbags (12) in Längsrichtung umgibt.

4. Insassenschutzsystem nach Anspruch 1, wobei das Airbaggehäuse (16) einen Teil von der Umgebung des linken Endes des Airbags (12) bis zu der Umgebung des rechten Endes umgibt.

5. lnsassenschutzsystem nach einem der Ansprüche 1 bis 4, wobei das Airbaggehäuse (16; 16A) mit der Sitzschale (8) verbunden ist.

6. insassenschutzsystem nach einem der Ansprüche 1 bis 5, wobei der Gasgenerator (14) in dem Airbag (12; 12B) angeordnet ist und mit einem Befestigungsmitteln (14a; 14b); welches durch den Airbag (12; 12B) verläuft, befestigt ist, und wobei der Airbag (12; 12B) zwischen dem Gasgenerator (14) und der Sitzschale (8) sandwichartig angeordnet ist.

7. Insassenschutzsystem nach einem der Ansprüche 1 bis 6, weiter eine Abdeckung (34; 38) zum Abdecken des Airbags (12; 12G) umfassend, wobei die Abdeckung (34; 38) bricht oder verformt wird, wenn sich der Airbag (12; 12G) aufbläst, um das Aufblasen des Airbags (12; 12G) zu ermöglichen.

## Revendications

1. Un système de protection de passager, comprenant :
- un coussin de sécurité gonflable (12 ; 12A ; 12B ; 12C ; 12G) disposé entre un coussin de siège et un fond de siège (8) afin de s'étendre le long de la largeur d'un siège et d'être gonflable afin de pousser l'avant du coussin de siège depuis dessous ;
- un générateur de gaz (14 ; 14A) pour gonfler le coussin de sécurité gonflable en cas d'urgence ; et
- une enveloppe de coussin (16 ; 16A ; 16G ; 16H) enfermant au moins une partie intermédiaire longitudinale du coussin de sécurité gonflable (12 ; 12A ; 12B ; 12C ; 12G), **caractérisé en ce que** le périmètre de l'enveloppe de coussin (16; 16A ; 16G ; 16H) est plus petit que celui du coussin de sécurité gonflable (12 ; 12A ; 12B ; 12C ; 12G) dans une condition gonflée.

2. Un système de protection de passager selon la revendication 1, dans lequel l'enveloppe de coussin (16 ; 16A ; 16G) enferme au moins un centre longitudinal du coussin de sécurité gonflable (12 ; 12A ; 12B ; 12C ; 12G).

3. Un système de protection de passager selon la revendication 1, dans lequel l'enveloppe de coussin (16H) enferme au moins une pluralité de parties intermédiaires longitudinales du coussin de sécurité gonflable (12).

4. Un système de protection de passager selon la revendication 1, dans lequel l'enveloppe de coussin (16) enferme une partie à proximité de l'extrémité gauche du coussin de sécurité gonflable (12) jusqu'à proximité de l'extrémité droite.

5. Un système de protection de passager selon l'une quelconque des revendications 1 à 4, dans lequel l'enveloppe de coussin (16 ; 16A) est assemblée au fond de siège (8).

6. Un système de protection de passager selon l'une quelconque des revendications 1 à 5, dans lequel le générateur de gaz (14) est disposé dans le coussin de sécurité gonflable (12 ; 12B) et fixé sur le fond de siège (8) avec un dispositif de fixation (14 ; 14b) passant à travers le coussin de sécurité gonflable (12 ; 12B) et le coussin de sécurité gonflable (12 ; 12B) est pris en sandwich entre le générateur de gaz (14) et le fond de siège (8).

7. Un système de protection de passager selon l'une quelconque des revendications précédentes 1 à 6, comprenant en outre un couvercle (34 ; 38) pour recouvrir le coussin de sécurité gonflable (12 ; 12G), le couvercle (34 ; 38) étant cassé ou déformé lorsque le coussin de sécurité gonflable (12 ; 12G) se gonfle pour permettre le gonflage du coussin de sécurité gonflable (12; 12G).
